# EUROPEAN PATENT APPLICATION

(11) **EP 2 455 213 A2**
(43) Date of publication of application: **23.05.2012**
(21) Application number: 11190405.8
(22) Date of filing: 23.11.2011
(51) Int. Cl.: B29C 70/38

(54) **A peel ply material for use in an automated tape laying machine**

(30) Priority: 23.11.2010 ES 201031718
(71) Applicant: Airbus Operations S.L., 28906 Madrid (ES)
(72) Inventor: Galera Cordoba, Georgina, 28341 Valdemoro, Madrid (ES); Cano Cediel, José David, 28320 Pinto, Madrid (ES)
(74) Representative: Elzaburu Marquez, Alberto

(57) **Abstract**

A prepreg peel ply material (21) to be used for improving the surface roughness of a composite laminate (13) comprising a backing paper (23) and a base fabric (27) impregnated with a thermosetting resin, wherein the adherence between the backing paper (23) and the base fabric (27), measured by a peeling off parameter P is comprised between 2,9-3,5 min/N/cm2 and the adherence between the base fabric (27) and the composite material, measured by said parameter P is comprised between 130-160 min/N/cm2. The invention also refers to a method for determining the adaptability to an ATL machine of a prepreg peel ply material (21) including the obtention of said parameter P and to a method for manufacturing a composite component comprising an step of laying-up a peel ply base fabric (27) with an ATL machine as the last layer of said component and even as the first layer.

## Description

### FIELD OF THE INVENTION

The present invention refers to the fabrication of composite components and more in particular to a peel ply material for use in an Automated Tape Laying machine and to a composite component fabrication method where the peel ply is laid-up by an Automated Tape Laying machine.

### BACKGROUND OF THE INVENTION

Composite component manufacturing methods comprising a lay-up stage where layers of a composite material in a roll format are placed in a mould of suitable shape and a curing stage are well known in the aeronautical industry as well as in other industries.

The composite materials that are most used in the aeronautical industry consist of fibers or fiber bundles embedded in a matrix of thermosetting or thermoplastic resin, in the form of a preimpregnated or "prepreg" material. Their main advantages refer to:
- Their high specific strength with respect to metallic materials.
- Their excellent behavior under fatigue loads.
- The possibilities of structural optimization thanks to the anisotropy of the material and the possibility of combining fibers with different orientations, allowing the design of the elements with different mechanical properties adjusted to the different needs in terms of applied loads.

The layers of composite material are not placed randomly, but are arranged in each zone in a number and with an orientation of their fibre reinforcement, typically of carbon fibre, that depend on the nature and the magnitude of the stresses that are to be withstood by the component in each zone. Thus, each zone has a particular structure of the arrangement or stacking of the layers. The difference in thickness between the different zones generates drop-offs in the layers, which requires having a ply model for each component establishing how to the arrange the layers on the jig during the stacking process. The final result is a laminate (flat or with curvature) with zones of different thickness.

The lay-up stage is usually carried out, particularly for large components such as the skins of aircraft wings, using Automatic Tape Laying machines (hereinafter ATL machines) for laying unidirectional (UD) or fabric tapes.

Before the curing stage is carried out in an autoclave with temperature and vacuum until the component reaches its finished state, a peel ply material, such as a textured fabric, is applied over the upper layer (in some specific cases could also be laid up as the first ply) of the composite material to provide the surface of the component with the appropriate roughness for facilitating the union of additional elements such as stringers to aircraft wing skins or superficial coatings. After the curing stage the peel ply material is peeled off leaving a textured surface in the composite component.

A peel ply is then a high drapable fabric, usually made of nylon, used to acquire the proper texture on the surface of a composite laminate. The peel-ply surface is helpful for secondary bonding or painting the component, avoiding the need of sanding. The fabric is treated in such a way to prevent shrinkage and to remove contaminates.

A preimpregnated peel-ply (hereinafter prepeg peel-ply) is made of the fabric previously mentioned embedded in a resin matrix.

In the prior art, the prepreg peel ply is placed manually as the first and/or last layer of the laminate. In the case of composite components that includes curved sectors, such as an aircraft wing skin of a large dimension, the prepreg peel ply lay-up task is therefore a very labour consuming task.

It would be thus desirable a composite component fabrication method where the peel ply be laid-up by an automated tape laying machine.

### SUMMARY OF THE INVENTION

An object of the present invention is to provide a method for determining the adaptability of a prepreg peel ply material used for improving the surface roughness of a composite laminate to an ATL machine so that it can be automatically laid-up by said ATL machine.

Another object of the present invention is to provide a prepreg peel ply material used for improving the surface roughness of a composite laminate able to be laid-up by an ATL machine.

Another object of the present invention is to provide a composite component fabrication method where the prepeg peel ply is laid-up by an ATL machine.

In one aspect these and another objects are met by a method for determining the adaptability to an ATL machine of a prepreg peel ply material used for improving the surface roughness of a composite laminate so that it can be automatically laid-up by said ATL machine, the prepeg peel ply material comprising a backing paper and a base fabric impregnated with a thermosetting resin, that comprises the following steps:
a) providing sheets of, respectively, said backing paper, said base fabric and the composite material;
b) assembling a first sample joining a backing paper sheet and a base fabric sheet in an overlapping area and a second sample joining a composite material sheet and a base fabric sheet in an overlapping area by the application of a vacuum force during a predetermined time;
c) applying tensile forces F1, F2 in a longitudinal direction over the edge of the basic fabric sheet of said samples, having its opposed edge fixed to a fixing element, up to the peeling off of the basic fabric sheet from the samples and measuring the times needed for the peeling off;
d) determining said adaptability of the prepreg peel ply material using a parameter P setting the relation between said peeling off times, said tensile forces F1, F2 and said overlapping areas as a measure of the adherence between the two elements of said samples.

In a preferred embodiment, said sheets have the same dimensions, said overlapping areas extend over a longitudinal area of said sheets comprised between 10-20% of its total areas and said sample assembling is made applying to said sheets a vacuum force comprised between 400-600 mm of Hg during a time comprised between 8-12 min. Hereby it is achieved a suitable method for the peel ply material used in the fabrication of composite components particularly in the aeronautical industry.

In another aspect the above-mentioned objects are met by a prepreg peel ply material comprising a backing paper and a base fabric impregnated with a thermosetting resin in which the adherence between the backing paper and the base fabric measured by the above-mentioned parameter P, is comprised between 2,9-3,5 min/N/cm2 and the adherence between the base fabric and the composite material, measured by the above-mentioned parameter P, is comprised between 130-160 min/N/cm2.

In a preferred embodiment the base fabric is nylon having the impregnated thermosetting resin (preferably epoxy resin) symmetrically distributed. Hereby it is achieved a suitable peel ply material for being used in the fabrication of composite components using ATL machines.

In another aspect the above-mentioned objects are met by a method for manufacturing a composite component comprising steps of laying-up composite prepreg layers on a mould using an ATL machine, that also comprise steps of:
a) providing said ATL machine with the above-mentioned prepreg peel ply material and laying-up the peel ply base fabric impregnated with said thermosetting resin as the last layer of said component and, if required, also as the first layer;
b) curing said composite component and peeling off said peel ply base fabric.

Other characteristics and advantages of the present invention will be clear from the following detailed description of embodiments illustrative of its object in relation to the attached figures.

### DESCRIPTION OF THE DRAWINGS

Figure 1 shows a schematic perspective view of the lay-up of a composite component.
Figure 2 shows a schematic sectional view of a prepreg peel ply layer according to the present invention.
Figure 3 shows schematically the arrangement of two samples used in the method for determining the adaptability to an ATL machine of a prepreg peel ply material according to this invention and Figure 4 shows schematically the application of tensile forces to said two samples.
Figure 5 is a schematic view of the lay-up of the prepreg peel ply layer of a composite component using an ATL machine.

### DETAILED DESCRIPTION OF THE INVENTION

Automated procedures for the lay-up stage in composite component manufacturing methods, particularly for large components such as aircraft wing skins, are well known in the art. ATL machines have a movable tape delivery head mechanism mounted between parallel guides that can be moved along multiple axis to place a prepreg tape on a variety of mould shapes. The prepreg tape, usually provided in a large roll format, contains uncured composite material held on a backing paper which is removed as the tape is placed on the mould.

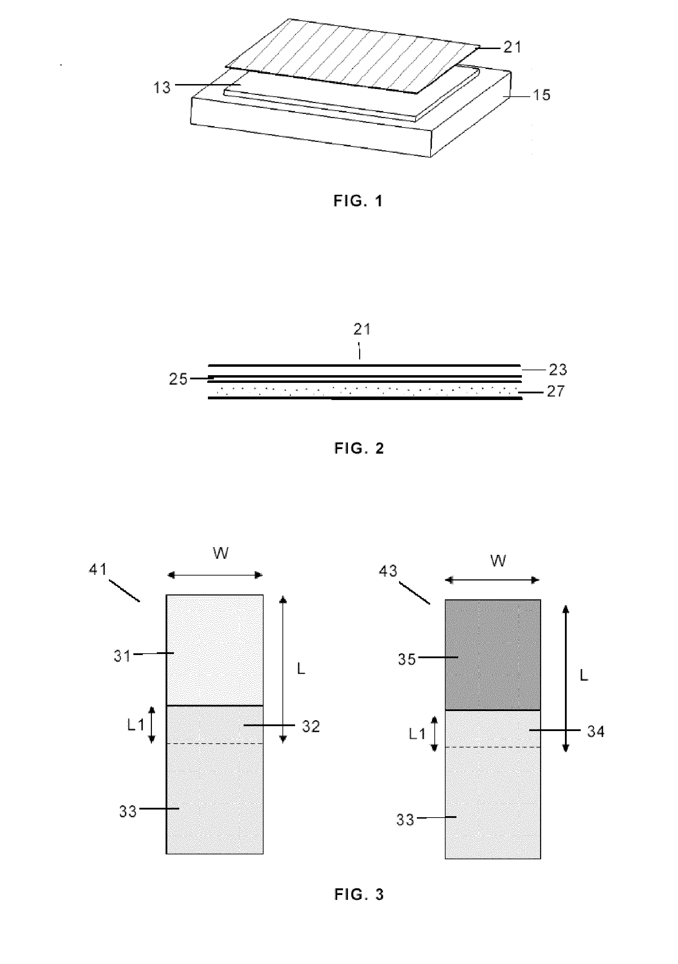

In the prior art, it is considered that a prepreg peel ply 21 (see Figure 1) can not be placed using an ATL machine on a composite laminate 13 laid-up by an ATL machine over a mould 15 because an adequate prepreg peel-ply format had not been achieved yet.

In fact, the inventors have tested a typical prepreg peel ply used in the aeronautical industry such as *Hexcel's F161*/*43%*/*F0811,* composed by a nylon fabric and a thermosetting resin where a backing paper was added in order to obtain a product in ATL format. It was verified that this material can not be laid-up using an ATL machine due to, on the one hand, an excess of adherence between the backing paper and the prepreg peel ply and, on the other hand, to the resin transference to the ATL machine guides.

There are a big number of prepreg peel ply features to be considered for finding a suitable prepreg peel ply to be laid-up with an ATL machine such as, particularly, the following:
- Type of fabric (nylon, polyester, ...).
- Type of resin, resin content (%), resin distribution (symmetric or asymmetric), impregnation level.
- Type of backing paper, paper release properties.

The backing paper of said prepreg peel ply material shall have sufficient dimensional stability, tear strength and burst strength to withstand the many forces that are applied to the backing paper as it travels through the ATL machine guides. The backing paper must also be resistant to moisture for dimensional stability purposes and in order to prevent possible water-based degradation of the backing paper when it is in storage, in use and under tension. Paper-based backing materials, which have been treated with silicone as a release agent, are commonly used for automated tape laying machines with prepreg tapes but the peel ply base fabric has very different release requirements than the backing paper usually used in other prepreg materials.

In particular, the prepreg peel ply material shall avoid:
- An excessive adherence between the backing paper and the resin impregnated fabric.
- That the ATL machine guides be impregnated with resin for allowing correct sliding of the prepreg peel ply.
- A resin transfer from the prepreg peel ply to the backing paper.

As the prior art does not provide any information for solving the above mentioned problem the inventors have developed a method for determining the adaptability to an ATL machine of a prepreg peel ply material 21 comprising (see Figure 2) a backing paper 23 with an inner coating 25 of a release material and a base fabric 27 impregnated with a thermosetting resin.

The method is based on the consideration that the main properties of the peel ply material involved in this problem are:
- The release of the backing paper 23 to the extend that it appears to be a relevant property regarding the adherence between the backing paper 23 and the base fabric 27.
- The tacking of the base fabric 27 to the extend that it appears to be relevant a property regarding the adherence between the base fabric 27 and the composite laminate 13.

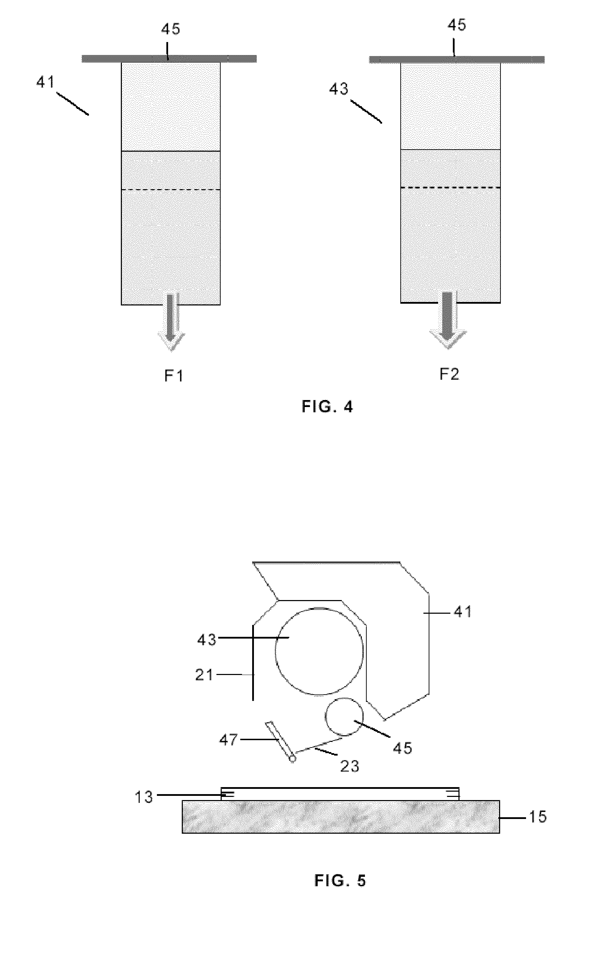

The method comprises the following steps (see Figures 3 and 4):
a) Providing sheets 31, 33, 35 of, respectively, said backing paper 23, said base fabric 27 and the composite material.
b) Assembling a first sample 41 joining a backing paper sheet 31 and a base fabric sheet 33 in an overlapping area 32 and a second sample 43 joining a composite material sheet 35 and a base fabric sheet 33 in an overlapping area 34 by the application of a vacuum force during a predetermined time.
c) Applying tensile forces F1, F2 in a longitudinal direction over the edge of the basic fabric sheet 33 of said samples 41, 43, having its opposed edge fixed to a fixing element 45 up to the peeling off of the basic fabric sheets 33 from the samples 41, 43 (i.e from, respectively, the backing paper 31 and the composite material 35) and measuring the times needed for said peeling off. As the skilled man will easily understand the steps a), b), c) will be repeated in a suitable number of times to provide reliable results.
d) Determining said adaptability of the prepreg peel ply material 21 using a parameter P setting the relation between said peeling off times, said tensile forces F1, F2 and said overlapping areas 32, 34 as a measure of the adherence between the two elements 31, 33; 35, 33 of said samples 41, 43.

In a preferred embodiment said sheets 31, 33, 35 have the same dimensions, said overlapping areas 32, 34 extend over a longitudinal area of said sheets 31, 33; 35, 33 comprised between 10-20% of its total areas and said sample assembling is made applying to said samples 41, 43 a vacuum force comprised between 400-600 mm of Hg during a time comprised between 8-12 min.

In a particular example the following values of the above mentioned parameters were used:
- The length L of all said sheets 31, 33, 35 was 210 mm and the width W of all of said sheets 31, 33, 35 was 150 mm.
- The overlapping areas 32, 34 had a length L1 of 30 mm.
- A vacuum force of 500 mm of Hg was applied during 10 minutes.
- A force of 10 N was applied to the sample 41 joining a backing paper sheet 31 and a base fabric sheet 33.
- A force of 45 N was applied to the sample 43 joining a composite material sheet 35 and a base fabric sheet 33.

Using said method the inventors found that a prepeg peel ply material 21 is able for being used by an ATL machine when:
- The parameter P obtained for said first sample 41 is comprised between 2,9-3,5 min/N/cm2.
- The parameter P obtained for said second sample 43 is comprised between 130-160 min/N/cm2.

In these conditions the backing paper 23 has the appropriate adherence for, on the one hand, keeping the peel ply material stuck before being used in an ATL machine and, on the other hand, for allowing a correct release between itself and the base fabric 27 when is laid-up with an ATL machine, and the base fabric 27 has the appropriate resin content for, on the one hand, allowing a correct sliding of the prepreg peel ply material 21 in and ATL machine, and on the other hand, for avoiding a resin transfer to the backing paper 23.

In a preferred embodiment, said base fabric 27 is a nylon fabric having the thermosetting resin symmetrically distributed.

In another preferred embodiment said thermosetting resin is an epoxy resin.

A method for manufacturing a composite component according to the present invention (see Figures 1 and 5) comprises steps of:
a) Laying-up the composite prepreg layers 13 on a mould 15 using an ATL machine 41, as in the prior art.
b) Providing said ATL machine 41 with a prepreg peel ply material 21 with the above-mentioned features and using said ATL machine 41 for laying-up the peel ply base fabric 27 impregnated with said thermosetting resin as the last layer of the component.
c) Curing said composite component and peeling off said peel ply base fabric 27.

The method can also include an step for laying-up the peel ply base fabric 27 impregnated with said thermosetting resin as the first layer.

The prepeg peel ply material 21, wound in a roll format, is loaded in the ATL machine 41, then the backing paper 23 is separated and rewound in the rewinder 45 and the base fabric 27, fed through the guides 47, is laid-up as the first and/or the last layer of the laminate 13.

Said first layer is applied to those components needing specific finishing features in its outer surface. Said last layer is applied to those components to which additional elements shall be joined on its inner surface such as the stringers joined to an aircraft wing skin.

Among the advantages of the present invention, the following can be highlighted:
- Significant productivity increase while reducing non recurrent costs. The current automatic tape layer machine runs up to 60 m/min. Additionally, laser-positioning projectors, patterns cutting machine, manual backup paper peeling, manual patterns placement and steeping on the mould tool are no longer needed.
- Quality improvement. The method according to the present invention assures a much better positioning accuracy while avoiding the typical wrinkles that are usually present in the manual placement.
- No additional machines are required. The peel-ply configuration has been developed in such a way that standard ATL machines can be used for its automatic placement.
- Better ergonomics. Workforce has no longer the need neither to bend down nor to step on the surface tool.

Although the present invention has been fully described in connection with preferred embodiments, it is evident that modifications may be introduced within the scope thereof, not considering this as limited by these embodiments, but by the contents of the following claims.

## Claims

1. A method for determining the adaptability to an Automatic Tape Laying (ATL) machine of a prepreg peel ply material (21) used for improving the surface roughness of a composite laminate (13) so that it can be automatically laid-up by said ATL machine, the peel ply material (21) comprising a backing paper (23) and a base fabric (27) impregnated with a thermosetting resin, **characterized in that** it comprises the following steps:
a) providing sheets (31, 33, 35) of, respectively, said backing paper (23), said base fabric (27) and the composite material;
b) assembling a first sample (41) joining a backing paper sheet (31) and a base fabric sheet (33) in an overlapping area (32) and a second sample (43) joining a composite material sheet (35) and a base fabric sheet (33) in an overlapping area (34) by the application of a vacuum force during a predetermined time;
c) applying tensile forces (F1, F2) in a longitudinal direction over the edge of the basic fabric sheet (33) of said samples (41, 43), having its opposed edge fixed to a fixing element (45), up to the peeling off of the basic fabric sheet (33) from the samples (41, 43) and measuring the times needed for said peeling off;
d) determining said adaptability of the prepreg peel ply material (21) using a parameter P setting the relation between said peeling off times, said tensile forces (F1, F2) and said overlapping areas (32, 34) as a measure of the adherence between the two elements (31, 33; 35, 33) of said samples (41, 43).

2. A method according to claim 1, wherein:
- said sheets (31, 33, 35) have the same dimensions;
- said overlapping areas (32, 34) extend over a longitudinal area of said sheets (31, 33; 35, 33) comprised between 10-20% of its total areas;
- said sample assembling is made applying to said samples (41, 43) a vacuum force comprised between 400-600 mm of Hg during a time comprised between 8-12 min.

3. A prepreg peel ply material (21) to be used for improving the surface roughness of a composite laminate (13), the peel ply material comprising a backing paper (23) and a base fabric (27) impregnated with a thermosetting resin, **characterized in that**:
- the adherence between the backing paper (23) and the base fabric (27), measured by the parameter P of any of claims 1-2, is comprised between 2,9-3,5 min/N/cm2;
- the adherence between the base fabric (27) and the composite material, measured by the parameter P of any of claims 1-2, is comprised between 130-160 min/N/cm2.

4. A prepreg peel ply material (21) according to claim 3, wherein said base fabric (27) is nylon having the impregnated thermosetting resin symmetrically distributed.

5. A prepreg peel ply material (21) according to any of claims 3-4, wherein said thermosetting resin is an epoxy resin.

6. A method for manufacturing a composite component comprising steps of laying-up composite prepreg layers (13) on a mould (15) using an ATL machine (41), **characterized in that** also comprise steps of:
- a) providing said ATL machine (41) with a prepreg peel ply material (21) according to any of claims 3-5 and laying-up the peel ply base fabric (27) impregnated with said thermosetting resin as the last layer of said component;
b) curing said composite component and peeling off said peel ply base fabric (27).

7. A method for manufacturing a component according to claim 6, also comprising a step of laying-up the peel ply base fabric (27) impregnated with said thermosetting resin with the ATL machine (41) as the first layer of said component.
